Europäisches Patentamt

European Patent Office

Office européen des brevets

(19)

(11) Veröffentlichungsnummer: **0 158 240**
**A2**

(12) **EUROPÄISCHE PATENTANMELDUNG**

(21) Anmeldenummer: **85103773.9**

(22) Anmeldetag: **28.03.85**

(51) Int. Cl.⁴: **C 01 G 49/02**

---

(30) Priorität: **12.04.84 DE 3413752**

(43) Veröffentlichungstag der Anmeldung:
**16.10.85 Patentblatt 85/42**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Steck, Werner, Dr.**
**Auerstrasse 4**
**D-6700 Ludwigshafen(DE)**

(72) Erfinder: **Feser, Rainer, Dr.**
**Gerhart-Hauptmann-Strasse 33**
**D-6717 Hessheim(DE)**

(72) Erfinder: **Jakusch, Helmut, Dr.**
**Lorscher Ring 6c**
**D-6710 Frankenthal(DE)**

(72) Erfinder: **Rudolf, Peter, Dr.**
**Wiesenstrasse 1**
**D-6708 Neuhofen(DE)**

(72) Erfinder: **Vaeth, Guenter**
**Woogstrasse 35**
**D-6703 Limburgerhof(DE)**

(72) Erfinder: **Kullmann, Udo, Dr.**
**Mohngasse 23**
**D-6716 Dirmstein(DE)**

(54) Verfahren zur Herstellung isotroper magnetischer, kobalthaltiger Eisenoxide.

(57) Die Erfindung betrifft ein Verfahren zur Herstellung isotroper magnetischer, kobalthaltiger Eisenoxide auf der Basis des Gamma-Eisen(III)oxids mit einem Gehalt an Kobalt(II)-Ionen von 2 bis 7 Gew.% und an Fe(II)-Ionen von kleiner 2 Gew.%, jeweils bezogen auf das Eisenoxid, mit einer Teilchenlänge von 0,08 bis 0,30 µm bei einem Längen-Dickenverhältnis von 1,5 bis 3,5 und einer spezifischen remanenten Magnetisierung nach Sättigung von mindestens 60 nTm³/g.

EP 0 158 240 A2

0158240

Verfahren zur Herstellung isotroper magnetischer, kobalthaltiger Eisenoxide

Die Erfindung betrifft ein Verfahren zur Herstellung isotroper magnetischer, kobalthaltiger Eisenoxide auf der Basis des Gamma-Eisen(III)oxids mit einem Gehalt an Kobalt(II)-Ionen von 2 bis 7 Gew.% und an Fe(II)-Ionen von kleiner 2 Gew.%, jeweils bezogen auf das Eisenoxid, mit einer Teilchenlänge von 0,08 bis 0,30 μm bei einem Längen-Dickenverhältnis von 1,5 bis 3,5 und einer spezifischen remanenten Magnetisierung nach Sättigung von mindestens 60 $nTm^3/g$.

Die Entwicklung der magnetischen Aufzeichnungsträger ist seit geraumer Zeit, insbesondere durch die Anforderungen bei der Daten- und Videosignalspeicherung, auf Aufzeichnungen in hoher Dichte gerichtet. Für diesen Zweck werden Aufzeichnungsmaterialien mit äußerst glatten Oberflächen auf der Basis von in organischen Bindemitteln feinverteilten magnetischen Materialien mit sehr hohen Koerzitivfeldstärken als besonders geeignet angesehen. Durch die mit der Erhöhung der Aufzeichnungsdichte verbundene Verringerung der Aufzeichnungswellenlänge macht sich zunehmend die Verringerung der Ausgangsleistung durch Selbstentmagnetisierung der Aufzeichnungsschicht bemerkbar. Eine Verminderung der Entmagnetisierung ist zwar durch die Verringerung der Schichtdicke möglich. Doch sind dieser Maßnahme bei magnetische Pulver enthaltenden Bindemittelschichten aufweisenden Aufzeichnungsträgern sowohl hinsichtlich der Verringerung des vorhandenen magnetischen Materials pro Flächeneinheit, d.h. der remanenten Magnetisierung des Schichtelements als auch aus fertigungstechnischen Gründen Grenzen gesetzt. Ein anderer Weg, das Problem der geringen Schichtdicke bei dennoch ausreichender Magnetisierung zu beheben, wird mit Aufzeichnungsmaterialien auf der Basis von dünnen magnetischen Metallfilmen versucht. Hierbei treten jedoch neben den Problemen der Herstellung solcher homogener Metallschichten vor allem mechanische Probleme bei deren Benutzung auf.

Im Hinblick auf die aufgezeigten Schwierigkeiten und im Bestreben dennoch magnetische Aufzeichnungssysteme, welche eine hohe Aufzeichnungsdichte bei hohen Ausgangspegeln aufweisen, bereitzustellen, wurde auch bereits vorgeschlagen, eine zum Aufzeichnungsträger senkrechte magnetische Aufzeichnung vorzunehmen. Hierzu müßten die Aufzeichnungsträger Schichten aufweisen, die zumindest in dem Schichtbereich, welcher dem Magnetkopf am nächsten liegt, eine senkrechte Magnetisierung ermöglichen (US-PS 3 052 567). In der weiteren Entwicklung dieses Prinzips wurde eine Reihe unterschiedlicher magnetischer Schichten mit einer zur Trägerfläche senkrechten magnetischen Anisotropie, meist auf der Basis von Co/Cr-Schichten, unter-Sob/P

sucht. Jedoch konnten weder die Herstellung noch die erzielbaren Eigenschaften bisher befriedigen. Ein wesentliches Problem stellte aber auch die Entwicklung eines für die Aufzeichnungsverfahren geeigneten Magnetkopfes dar.

Ein anderer Weg zur Erhöhung der Aufzeichnungsdichte bei hoher Empfindlichkeit wurde in der Ausnutzung der Vertikalkomponente des für die Aufzeichnung verwendeten magnetischen Feldes gesehen. Hierbei wird die insbesondere bei hoher Aufzeichnungsdichte (kurzer Wellenlänge) wirksame Vertikalkomponente eines von einem Ringkopf auf der Oberfläche der magnetischen Schicht erzeugten magnetischen Feldes herangezogen. Als magnetische Materialien für solche Aufzeichnungssysteme eignen sich Produkte, die eine hohe relative Remanenz in allen Richtungen des Aufzeichnungsträgers ergeben. Hierfür eignen sich magnetische isotrope Materialien, insbesondere diejenigen, die auf der Basis der bekannten kobaltdotierten kubischen Eisenoxide aufgebaut sind. Die Herstellung solcher sowohl isometrischer als auch stark anisometrischer magnetischer Eisenoxide ist bekannt. Desgleichen ist die Herstellung anisometrischer Eisenoxide mit volumenhomogener Kobaltdotierung bekannt (DE-PS 1 226 997, DE-AS 22 21 218, DE-OS 29 03 593).

Diese Materialien haben jedoch den Nachteil, daß sie sich weder hinsichtlich der magnetischen Eigenschaften, insbesondere hoher spezifischer Remanenz und enger Schaltfeldstärkenverteilung noch bezüglich der Stabilität der magnetischen Eigenschaften bei thermischer und mechanischer Belastung sowie der geometrischen Abmessungen, wie zu ausgeprägtem oder aber völlig fehlendem Nadelcharakter für die Anwendung in magnetischen Aufzeichnungsträgern eignen.

Aufgabe der Erfindung war es daher, ein Verfahren zur Herstellung isotroper magnetischer Eisenoxide bereitzustellen, das sich einerseits in einfacher und wirtschaftlicher Weise mit gängigen Rohstoffen bewerkstelligen läßt und andererseits ein magnetisches Material liefert, das sich durch eine isotrope Magnetisierung, insbesondere eine hohe isotrope spezifische Remanenz, durch eine für Aufzeichnungträger geeignete hohe Koerzitivfeldstärke und darüber hinaus vor allem eine besonders enge Schaltfeldstärkenverteilung der magnetisierbaren Einzelpartikel sowie durch vorteilhafte geometrische Abmessungen, welche zu einem Kompromiß zwischen Kristall- und Formanisotropieanteil führt, auszeichnet.

Es wurde nun gefunden, daß sich die gestellte Aufgabe durch ein Verfahren zur Herstellung isotroper magnetischer, kobalthaltiger Eisenoxide auf der Basis des Gamma-Eisen(III)oxids mit einem Gehalt an Kobalt(II)-Ionen von 2 bis 7 Gew.% und an Eisen(II)-Ionen von kleiner 2 Gew.%, jeweils bezogen auf das Eisenoxid, mit einer Teilchenlänge von 0,08 bis 0,30 μm bei einem Längen- zu Dicken-Verhältnis von 1,5 bis 3,5 und einer spezifischen remanenten Magnetisierung nach Sättigung von mindestens 60 $nTm^3/g$ lösen läßt, wenn die Herstellung dieses Materials durch Umsetzen von Eisen(II)sulfat in Gegenwart von Kobalt(II)- und Phosphat-Ionen in saurer wäßriger Phase nach dem an sich bekannten sogenannten sauren-Verfahren ein kobalthaltiges $\alpha$-FeOOH hergestellt wird, das nach dem Abfiltrieren, Waschen und Trocknen durch Erhitzen in einer reduzierenden Atmosphäre zu kobalthaltigem Magnetit reduziert und anschließend in sauerstoffhaltiger Atmosphäre zu kobalthaltigem Eisenoxid oxidiert wird.

Nach dem an sich bekannten sogenannten sauren-Verfahren zur Herstellung von $\alpha$-FeOOH werden in einer ersten Stufe durch teilweises Ausfällen von Eisen(II)-Hydroxid aus einer Eisen(II)sulfat-Lösung mittels Alkalien und anschließender Oxidation durch sauerstoffhaltige Gase solange $\alpha$-FeOOH-Keime erzeugt, bis der pH-Wert der Suspension kleiner 4 ist. Diese Keime wachsen dann in einer zweiten Stufe bei einem pH-Wert zwischen 4 und 5,5 unter kontinuierlicher Zugabe von weiterem Eisen(II)sulfat und Alkali und Durchleiten von sauerstoffhaltigen Gasen zum $\alpha$-FeOOH-Endprodukt auf.

Dieses Verfahren wird nun erfindungsgemäß bei gleichzeitiger Anwesenheit von Kobalt(II)- und Phosphat-Ionen durchgeführt. Dabei wird die Menge an Kobalt(II)-Ionen so ausgewählt, daß im Endprodukt 2 bis 7 Gew.% Kobalt vorhanden sind. Der Anteil an Phosphat-Ionen in der Herstellsuspension wird vorteilhafterweise zwischen 0,3 bis 1,2 Gew.%, ebenfalls bezogen auf das Endprodukt, gehalten. Bei der Durchführung des Verfahrens hat es sich als zweckmäßig herausgestellt, die Temperatur in den beiden Fällungsstufen zwischen 20 und 50°C zu halten und in der ersten Stufe der Bildung der FeOOH-Keime zwischen 20 und 50 % der zweiwertigen Metallionen auszufällen sowie dann in der zweiten Stufe den pH-Wert zwischen 4,5 und 5,5 einzustellen. Außerdem ist es angebracht, die Konzentration der Reaktionssuspension so zu wählen, daß die Gesamtkonzentration an Eisen(II)- und Kobalt(II)-Ionen 15 bis 45 g pro Liter entsprechend 25 bis 70 g kobalthaltiges $\alpha$-FeOOH je Liter beträgt.

Die Zugabe der Phosphationen erfolgt in Form der primären und/oder sekundären und/oder tertiären Alkali- und/oder Ammoniumsalze der Orthophosphorsäure.

Nach beendeter Synthese wird zur vollständigen Ausfällung eventuell noch vorhandener Co(II)-Ionen als $Co(OH)_2$ der pH-Wert der kobalthaltigen $\alpha$-FeOOH-Suspension mit Alkali auf Werte zwischen 8 und 12 gestellt. Nach einer Nachrührzeit von 10 bis 240 Minuten wird das Co-haltige -FeOOH filtriert und mit Wasser gewaschen bis das Filtrat sulfatfrei ist. Der gewaschene Filterkuchen wird dann bei Temperaturen zwischen 50 und 180°C im Vakuum oder bei Normaldruck getrocknet.

Anschließend wird das kobalthaltige $\alpha$-FeOOH in an sich bekannter Weise in einer reduzierenden Atmosphäre, z.B. mit Wasserstoff und/oder Kohlenmonoxid und/oder mittels organischer Substanzen, die sich in Gegenwart von Eisenoxiden zersetzen, zu kobalthaltigem Magnetit reduziert, wobei in allen Fällen die gleichzeitige Anwesenheit von Wasserdampf zur Vermeidung einer Reduktion zu metallischen Phasen zweckmäßig ist. Je nach Reduktionsmittel und -dauer, die zwischen 10 Minuten und etwa 2 Stunden liegen kann, erweisen sich Reduktionstemperaturen zwischen 380 und 580°C als geeignet. Die Reduktion mit Wasserstoff als alleinigem Reduktionsmittel ergibt bei Temperaturen zwischen 380 und 500°C und bei Reduktionszeiten von 15 bis 90 Minuten besonders vorteilhafte Ergebnisse. Erfolgt die Reduktion gegebenenfalls vollständig oder zumindest teilweise durch organische Substanzen, die sich in Gegenwart von Eisenoxiden zersetzen, so kann der organische Stoff bereits zur frischen Herstellsuspension des kobalthaltigen $\alpha$-FeOOH, d.h. auf der Stufe des ungewaschenen oder gewaschenen Filterkuchens oder dem getrockneten Produkt zugesetzt werden. Als im Rahmen der Erfindung besonders zweckmäßig hat sich die Reduktion mittels organischer Substanzen in Anwesenheit von Zinnverbindungen gemäß der DE-OS 32 04 547 herausgestellt.

Der als Zwischenstufe erhaltene Co-haltige Magnetit läßt sich in an sich bekannter Weise mit oxidierenden Gasen, wie z.B. Sauerstoff oder Luft, bei Temperaturen zwischen etwa 250 und 500°C oxidieren. Abhängig von der jeweiligen Oxidationstemperatur haben sich Oxidationszeiten zwischen 10 Minuten und 2 Stunden als zweckmäßig erwiesen. Zur Erzielung hoher spezifischer Pulverremanenzen ist jedoch eine möglichst vollständige Oxidation, die zu einem Gamma-Eisen(III)-oxid mit möglichst kleinem Fe(II)-Gehalt führt, anzustreben. Dabei sind die Oxidationsbedingungen so zu wählen, daß die bekannte irreversible Umwandlung von $\gamma$-Fe$_2$O$_3$ in $\alpha$-Fe$_2$O$_3$ vermieden wird.

Die erfindungsgemäß hergestellten kobalthaltigen Eisenoxide auf der Basis des Gamma-Eisen(III)oxids zeichnen sich bei hoher Koerzitivfeldstärke und enger Schaltfeldstärkenverteilung insbesondere durch eine hohe isotrope spezifische remanente Magnetisierung aus. Der durch die Kobaltionen hervorgerufene Kristallanisotropie wird durch das geringe Längen- zu Dicken- -Verhältnis ein schwach r Formanisotropieanteil überlagert, welcher sich auf die sonst vorhandene Empfindlichkeit der magnetischen Eigenschaften bei thermischer oder mechanischer Belastung günstig auswirkt ohne jedoch eine Orientierung der Teilchen zu bewirken, welche die Herstellung isotroper Aufzeichnungsmedien beeinträchtigen würde.

Wesentlicher Verwendungszweck der erfindungsgemäß hergestellten cobalthaltigen, isotropen magnetischen Eisenoxide stellt der Einsatz als magnetisches Material bei der Herstellung von magnetischen Aufzeichnungsträgern dar. Mit ihnen lassen sich die von Koerzitivfeldstärke und Schaltfeldstärkenverteilung beeinflußten Aufzeichnungseigenschaften in überraschender Weise vorteilhaft verändern. Mit ihrer hohen relativen Remanenz in allen drei orthogonalen Richtungen lassen sie sich besonders vorteilhaft bei der Herstellung solcher magnetischer Aufzeichnungsträger heranziehen, mit welchen die Vorteile der Aufzeichnung mittels der wirksamen Vertikalkomponente zur Erhöhung von Bitdichte und zur Speicherung hoher Frequenzen ausgenutzt werden sollen.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele im Vergleich zu Versuchen nach dem Stand der Technik erläutert. Die angegebenen Co(II)- oder Fe(II)-Prozentgehalte beziehen sich als Gew.% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in [kA/m], wurden bei den Pulvermessungen auf eine Stopfdichte von $\rho = 1.2$ g/cm$^3$ bezogen. Spezifische Remanenz ($M_r/\rho$) und Sättigung ($M_m/\rho$) sind jeweils in [nTm$^3$/g] angegeben. Die Sättigung bzw. Remanenz von Bändern werden in [mT] angegeben.

Die Schaltfeldstärkenverteilung (SFD, switching field distribution) ist ein Maß für die magnetische Einheitlichkeit einer i.a. aus magnetisierbaren Einzelpartikeln bestehenden Speicherschicht. Sie gibt den Magnetfeldbereich an, in dem die Einzelpartikel umschalten. Die Schaltfeldstärkenverteilung einer magnetischen Aufzeichnungsschicht spielt bei der Speicherung kurzer Wellenlängen bzw. hoher Frequenzen eine entscheidende Rolle. Eine enge SFD verringert die Übergangslänge zwischen entgegengesetzt magnetisierten Bereichen und erlaubt so eine hohe Aufzeichnungsdichte.

Als Meßgröße für SFD wird (1-S*) herangezogen. (1-S*) wird aus der Steilheit der Hysteresekurve bei M=0 (d.h. $H_c$) gemäß der Formel $dM/dH = M_R/((1-S^*).H_c)$ gewonnen (M.L. Williams, R.L. Comstock, AIP Conf. Proc. 5, 738 (1971).

Die spezifische Oberfläche $S_{N_2}$ der Pigmente wird nach BET in $m^2/g$ bestimmt, d.h. an gewogenen evakuierten, gasfreien Pigmentproben wird Stickstoff adsorbiert. Die Differenzmenge Stickstoff vor und nach Adsorption wird in belegte Fläche umgerechnet und ins Verhältnis zur Einwaage gesetzt.

### Beispiel 1A

In einem 10-1-Glasgefäß, versehen mit Rückflußkühler, Rührer und pH-Elektrode, wurden 1151 g $FeSO_4$ . 7 $H_2O$ und 67,1 g $CoSO_4$ . 7 $H_2O$ unter Rühren (300 Upm) mit Wasser zu einem Gesamtvolumen von 6 l Lösung gelöst und mit 3,2 ml konzentrierter Schwefelsäure versetzt. Dann wurden 5,4 g $NaH_2PO_4$ . 2 $H_2O$ hinzugefügt. Gleichzeitig wurde die Lösung mit 300 Nl Stickstoff/h begast und eine Temperatur von 50°C eingestellt. Dann wurden 575 ml einer 15,7 %igen Natronlauge in 10 Minuten zugegeben. Der Ausfällgrad betrug 30 %, bezogen auf Me(II).

Nun wurden anstelle von Stickstoff 600 Nl Luft/h eingeleitet bis der pH-Wert nach 50 Minuten auf kleiner als 4 abgefallen war. 10 Minuten nach diesem Zeitpunkt wurde bei 50°C und weiterer Lufteinleitung und Rühren durch Zutropfen von 15,7 %iger Natronlauge der pH-Wert auf 5,1 gebracht und während der gesamten Wachstumsphase bei 5,1 bis 5,2 gehalten. Dauer der Wachstumsphase: ca. 115 Minuten. Nun wurde die Suspension auf 30°C abgekühlt und mit 15,7 %iger Natronlauge ein pH von 9,5 eingestellt. Nach zweistündigem Nachrühren wird filtriert, der Filterkuchen mit Wasser gewaschen bis das Filtrat $SO_4^{2-}$-frei ist. Schließlich wird der Filterkuchen bei 110°C getrocknet. Die Daten der so erhaltenen $\alpha$-FeOOH-Probe 1A sind in der Tabelle 1 angegeben.

### Beispiele 1B bis 1I

Es wurde wie in Beispiel 1A beschrieben verfahren, jedoch wurde das Verhältnis von Eisen(II)- zu Kobalt(II)-Ionen in der in der Tabelle angegebenen Weise geändert. Der Gehalt an Phosphat-Ionen betrug jeweils 0,8 Gew.%.

Tabelle 1

| Bei-spiel 1 | FeSO$_4$· 7H$_2$O [g] | CoSO$_4$ · 7 H$_2$O [g] | [Gew.%] Co(II)[2] | Synthesedauer Keimphase [min] | Wachstum [min] | S$_{N_2}$ im Co-$\alpha$-FeOOH [m$^2$/g] |
|---|---|---|---|---|---|---|
| A | 1151 | 67,1 | 3,8 | 50 | 115 | 61 |
| B | 1211 | 16,8 | 0,9 | 45 | 110 | 44 |
| C | 1207 | 22,4 | 1,2 | 45 | 100 | 46 |
| D | 1202 | 29,9 | 1,6 | 45 | 135 | 62 |
| E | 1197 | 37,3 | 2,0 | 40 | 95 | 60 |
| F | 1191 | 46,7 | 2,6 | 40 | 100 | 56 |
| G | 1185 | 56,0 | 3,1 | 45 | 105 | 60 |
| H | 1139 | 78,3 | 4,5 | 50 | 190 | 69 |
| I | 1179 | 56,7[1] | 3,7 | 45 | 110 | 52 |

[1] Anstelle von CoSO$_4$ · 7 H$_2$O wurde CoCl$_2$ · 6 H$_2$O verwendet.

[2] Bezogen auf theoretische Menge $\alpha$-FeOOH, die aus der jeweils angegebenen FeSO$_4$ · 7 H$_2$O-Menge entstehen kann.

Beispiel 2A

In der in Beispiel 1A beschriebenen Glasapparatur wurden 1167 g FeSO$_4$ · 7 H$_2$O und 83,9 g CoSO$_4$ · 7 H$_2$O mit Wasser zu einem Gesamtvolumen von 6 1-Lösung aufgelöst. Dann wurden 5,4 g NaH$_2$PO$_4$ · 2 H$_2$O hinzugefügt und eine Temperatur von 40°C eingestellt. Danach wurden 392 ml einer 15,3 %igen Natronlauge innerhalb 5 Minuten hinzugefügt. Der Ausfällgrad betrug 20 %, bezogen auf Me(II).

Nun wurde entsprechend Beispiel 1 Luft eingeleitet und die Co-$\alpha$-FeOOH-Keimbildung vorgenommen. Dauer: 35 Minuten. 10 Minuten nach beendeter Keimphase wurde bei 40°C unter weiterem Rühren und Lufteinleiten bei pH von 5,1 bis 5,3 die Wachstumsphase innerhalb 160 Minuten durchgeführt. Entsprechend Beispiel 1 wurde abgekühlt und mit Natronlauge ein pH-Wert von 9,5 eingestellt. Danach wurde filtriert und wie in Beispiel 1A beschrieben aufgearbeitet. Die Ergebnisse der Probe 2A sind in der Tabelle 2 angegeben.

## Beispiele 2B und 2C

Es wurde wie in Beispiel 2A beschrieben verfahren, jedoch wurde das Verhältnis Fe(II) : Co(II), wie in Tabelle 2 angezeigt, variiert. Beim Beispiel 2B wurde zudem das $CoSO_4$ erst 25 Minuten nach dem Beginn der Lufteinleitung in der Keimphase hinzugegeben. Die Ergebnisse sind in der Tabelle 2 angegeben.

Tabelle 2

| Beispiel 2 | $FeSO_4 \cdot 7H_2O$ [g] | $CoSO_4 \cdot 7 H_2O$ [g] | [Gew.%] Co(II)[1] | Synthesedauer Keimphase [min] | Wachstum | $S_{N_2}$ im Co-$\alpha$-FeOOH [$m^2$/g] |
|---|---|---|---|---|---|---|
| A | 1167 | 83,9 | 4,7 | 35 | 160 | 103 |
| B | 1131 | 93,2 | 5,4 | 50 | 145 | 77 |
| C | 1112 | 111,9 | 6,6 | 50 | 165 | 97 |

[1] Bezogen auf theoretische Menge $\alpha$-FeOOH, die aus der jeweils angegebenen $FeSO_4 \cdot 7 H_2O$-Menge entstehen kann.

## Beispiel 3

In der im Beispiel 1A beschriebenen Apparatur wurden wie in Beispiel 1A beschrieben, 1179 g $FeSO_4 \cdot 7 H_2O$ und 67,1 g $CoSO_4 \cdot 7 H_2O$ in Gegenwart von 5,4 g $NaH_2PO_4 \cdot 2 H_2O$ zu cobaltdotiertem Goethit umgesetzt. Unter Verwendung von 1071 ml an 14,8 %iger NaOH wurde jedoch ein Ausfällgrad von 50 %, bezogen auf Me(II) eingestellt. Die Keimbildungsdauer betrug 75 Minuten, das Wachstum benötigte 90 Minuten. Das resultierende kobalthaltige $\alpha$-FeOOH (Probe 3) wies einen $S_{N_2}$-Wert von 61 $m^2$/g auf.

## Beispiel 4

Es wurde wie in Beispiel 3 beschrieben verfahren, jedoch wurden anstelle des Natriumphosphates 3,2 ml einer 85 %igen Phosphorsäure ($H_3PO_4$) zugesetzt. Die Keimbildungsdauer betrug 90 Minuten, das Wachstum benötigte 65 Minuten. Das resultierende kobalthaltige $\alpha$-FeOOH (Probe 4) wies einen $S_{N_2}$-Wert von 70 $m^2$/g und einen $PO_4^3$-Gehalt von *1,05%*, bezogen auf die Gesamtverbindung, auf.

05 Beispiel 5

Es wurde wie in Beispiel 1A beschrieben verfahren, jedoch mit einer Keimbildungstemperatur von 30°C und einer Wachstumstemperatur von 50°C. Die Keimbildungsdauer betrug 40 Minuten, die Wachstumsdauer 80 Minuten. Der $S_{N_2}$-Wert (Probe 5) betrug 90 $m^2$/g.

Vergleichsversuch 1

Es wurde wie in Beispiel 1I beschrieben verfahren, jedoch ohne Zusatz von Phosphationen. Die Keimbildungsdauer betrug 45 Minuten, die Wachstumsdauer 145 Minuten. Das kobalthaltige $\alpha$-FeOOH (Probe 6) wies einen $S_{N_2}$--Wert von 48 $m^2$/g auf und zeigte in den elektronenmikroskopischen Aufnahmen (Vergrößerung 1:50.000) überwiegend deutlich längere Nadeln mit breiter Längenverteilung im Bereich von 0,35 bis 0,6 µm mit zahlreichen dendritischen Verzweigungen, d.h. sternenförmige Verwachsungen.

Beispiel 6

Es wurden jeweils 120 g kobalthaltiges $\alpha$-FeOOH der Beispiele 1A bis 5, sowie des Vergleichsversuches 1 in einem Drehrohrofen innerhalb 30 Minuten bei 440°C in einem Wasserstoffvolumenstrom von 100 Nl/h zu kobalthaltigem Magnetit reduziert. Vor dem Eintritt in das Reduktionsrohr wurde der $H_2$-Strom durch Wasser einer Temperatur von 60°C hindurchgeleitet. Nach beendeter Reduktion wurde die Magnetitprobe in einem Ofen gleicher Bauart innerhalb 30 Minuten bei 320°C in einem Luftvolumenstrom von 50 Nl/h zu kobalthaltigem $\alpha$-Fe_2O_3 oxidiert. Die Probe 6/2 A wurde vor der Reduktion bei 700°C innerhalb 30 Minuten zu kobalthaltigem $\alpha$-Fe_2O_3 mit einem $S_{N_2}$-Wert von 24,3 $m^2$/g entwässert und getempert.

In der Tabelle 3 sind die aus den verschiedenen Beispielen entnommenen Proben und die erhaltenen magnetischen und geometrischen Werte angegeben.

Tabelle 3

| Beispiel Ausgangs-material | $H_c$ | $M_{R/\delta}$ | SFD | $S_{N_2}$ | mittlere Teilchen-länge T [µm] | Länge/Durch-messer |
|---|---|---|---|---|---|---|
| 6/1 A | 60,4 | 69 | 0,44 | 21 | 0,15 | 2,8 |
| 6/1 B | 21,0 | 42 | 0,56 | 18 | - | - |
| 6/1 C | 23,6 | 47 | 0,56 | 19 | - | - |
| 6/1 D | 27,5 | 51 | 0,55 | 22 | 0,17 | 2,7 |
| 6/1 E | 32,3 | 64 | 0,56 | 17 | 0,17 | 2,5 |
| 6/1 F | 42,3 | 62 | 0,50 | 18 | 0,15 | 2,3 |
| 6/1 G | 49,5 | 62 | 0,47 | 19 | 0,16 | 2,7 |
| 6/1 H | 68,2 | 62 | 0,43 | 25 | 0,13 | 3,0 |
| 6/1 I | 61,7 | 60 | 0,46 | 18 | 0,17 | 2,6 |
| 6/2 A | 72,3 | 72 | 0,46 | 22 | 0,09 | 2,3 |
| 6/3 | 61,3 | 62 | 0,45 | 21 | 0,17 | 3,3 |
| 6/4 | 58,7 | 62 | 0,45 | 25 | 0,16 | 3,0 |
| 6/5 | 67,1 | 65 | 0,46 | 23 | 0,16 | 2,6 |
| Vgl.Vers. | 66,8 | 58 | 0,52 | 15 | 0,32 | 3,9 |

## Beispiel 7

Je 80 g des Materials gemäß Beispiel 1A wurden in einem Drehrohrofen unter den in der Tabelle 4 angegebenen Bedingungen innerhalb 30 Minuten reduziert und danach bei 320°C, wie in Beispiel 6 beschrieben, oxidiert.

Tabelle 4

| Bei-spiel | Reduktionsmittel und -bedingungen | $H_c$ | $M_{R/\delta}$ | SFD | Geometrische Daten | | |
|---|---|---|---|---|---|---|---|
| | | | | | $S_{N_2}$ | 1 [µm] | 1/d |
| 7/1 | 100 Nl $H_2$/h durch Wasser von 60°C geleitet, 440°C | 60,4 | 69 | 0,44 | 21 | 0,15 | 2,8 |
| 7/2 | wie 7/1, jedoch bei 480°C | 57,0 | 60 | 0,53 | 18 | 0,14 | 2,3 |

0158240

Beispiel 10

In einer mit 100 Teilen Stahlkugeln (2 mm Durchmesser) gefüllten Kugelmühle mit einem Füllvolumen von 250 Volumenteilen, wurden jeweils 50 Teile der in Tabelle 6 angegebenen magnetischen isotropen Eisenoxide, 3 Teile eines langkettigen, amphoteren, organophilen Dispergierhilfsmittels, 0,05 Teile eines Siliconöls und 0,5 Teile eines isomeren Carbonsäuregemischs, 6,6 Teile eines handelsüblichen isocyanatfreien Polyesterurethans aus Adipinsäure, Butandiol-1,4 und 4,4-Dicyanatodiphenylmethan mit einem K-Wert von 61 (gemessen als 1 %ige Lösung in Tetrahydrofuran) und 25 Teile eines Vinylchlorid-Maleinsäuremethylester-Copolymeren mit einem K-Wert von 59 (ebenfalls als 1 %ige Lösung in Tetrahydrofuran gemessen) sowie 78 Teile eines Gemisches aus gleichen Teilen von Tetrahydrofuran und 1,4-Dioxan zugegeben, wobei die Eingabe der angegebenen Bindemittel in Form ihrer Lösungen in dem genannten Lösemittelgemisch erfolgte. Nach einer Dispergierdauer von 3,5 Stunden wurde die Magnetdispersion filtriert und anschließend mit einer üblichen Beschichtungseinrichtung auf eine 12 µm dicke Polyethylenterephthalatfolie gegossen, so daß nach Trocknung in einem Trockenkanal und anschließendem Glättvorgang mit auf 80°C beheiztem Mehrwalzenkalander eine Schichtdicke von 5,2 µm erzielt wurde. Die an der Magnetschicht gemessenen magnetischen Eigenschaften sind in Tabelle 6 angegeben.

Tabelle 6

| Eingesetztes Eisenoxid Probe | $H_c$ [kA/m] | $M_R$ [mT] | SFD | Mr/Ms |
|---|---|---|---|---|
| 6/1 D | 25,9 | 145 | 0,40 | 0,75 |
| 6/1 E | 31,2 | 163 | 0,31 | 0,81 |
| 6/1 F | 40,2 | 160 | 0,33 | 0,84 |
| 6/1 G | 47,8 | 163 | 0,28 | 0,85 |
| 6/1 A | 61,6 | 150 | 0,29 | 0,86 |
| 8 A | 62,2 | 135 | 0,53 | 0,76 |
| 8 B | 68,5 | 155 | 0,32 | 0,85 |

Tabelle 4: Fortsetzung

| Beispiel | Reduktionsmittel und -bedingungen | $H_c$ | $M_{R/S}$ | SFD | Geometrische Daten | | |
|---|---|---|---|---|---|---|---|
| | | | | | $S_{N_2}$ | 1 [μm] | 1/d |
| 7/3 | kobalthaltiges $\alpha$-FeOOH mit 2,5 Gew.% eines hochmolekularen Polyethylens (MG 250.000) gemischt und bei 520°C in einem Stickstoffvolumenstrom von 10 Nl/h reduziert | 58,9 | 60 | 0,42 | 27 | 0,14 | 3,3 |
| 7/4 | kobalthaltiges $\alpha$-FeOOH mit 2,5 Gew.% Stearinsäure gemischt und in einem Gasgemisch von 100 Nl $N_2$/h und 100 Nl $H_2$/h reduziert bei 440°C | 60,6 | 63 | 0,47 | 23 | 0,15 | 2,8 |

## Beispiel 8

Das Beispiel 1A wurde wiederholt, jedoch wurden nach der Einstellung des pH-Wertes auf 9,5 am Ende der Synthese 10,7 ml Olivenöl der Suspension des kobalthaltigen $\alpha$-FeOOH zugesetzt und noch 1 Stunde nachgerührt. Nach der Filtration, dem Waschen und der Trocknung bei 110°C wurde ein $S_{N_2}$--Wert von 47 $m^2$/g gemessen (Probe 8).

Jeweils 120 g der Probe 8 wurden danach in einem Drehrohrofen in einem Wasserstoffstrom von 100 Nl/h, der zuvor durch Wasser von 60°C geleitet wurde, bei 480°C innerhalb 30 Minuten reduziert und danach bei 320°C (Probe 8A) bzw. 380°C (Probe 8B) innerhalb 30 Minuten in einem Luftstrom von 50 Nl/h oxidiert. Die Ergebnisse sind in Tabelle 5 angegeben.

Tabelle 5

| Probe | $H_c$ | $M_{R/S}$ | SFD | $S_{N_2}$ | 1 [μm] | 1/d | Fe(II)-Gehalt in Gew.% |
|---|---|---|---|---|---|---|---|
| 8A | 64,8 | 58 | 0,63 | 20 | 0,15 | 2,4 | 6,5 |
| 8B | 71,9 | 64 | 0,43 | 19 | 0,15 | 2,4 | 1,8 |

0158240

Patentansprüche

1. Verfahren zur Herstellung isotroper magnetischer, kobalthaltiger Eisenoxide auf der Basis des Gamma-Eisen(III)oxids mit einem Gehalt an Kobalt(II)-Ionen von 2 bis 7 Gew.% und an Fe(II)-Ionen von kleiner 2 Gew.%, jeweils bezogen auf das Eisenoxid, mit einer Teilchenlänge von 0,08 bis 0,30 μm bei einem Längen- zu Dickenverhältnis von 1,5 bis 3,5 und einer spezifischen remanenten Magnetisierung nach Sättigung von mindestens 60 $nTm^3/g$, dadurch gekennzeichnet, daß durch Umsetzen von Eisen(II)sulfat in Gegenwart von Kobalt(II)- und Phosphat-Ionen in saurer wäßriger Phase nach dem an sich bekannten sogenannten sauren Verfahren ein kobalthaltiges $\alpha$-FeOOH hergestellt wird, das nach dem Abfiltrieren, Waschen und Trocknen durch Erhitzen in einer reduzierenden Atmosphäre zu kobalthaltigem Magnetit reduziert und anschließend in sauerstoffhaltiger Atmosphäre zu kobalthaltigem Eisenoxid oxidiert wird.

2. Verfahren nach Anspruch 1, dadurch gekennzeichnet, daß 0,3 bis 1,2 Gew.% Phosphationen, bezogen auf $\alpha$-FeOOH, zugesetzt werden.

3. Verfahren nach Anspruch 1, dadurch gekennzeichnet, daß bei der Umsetzung zum kobalthaltigen $\alpha$-FeOOH in einer ersten Stufe 20 bis 50 % der vorhandenen zweiwertigen Metallionen ausgefällt werden.

4. Verfahren nach Anspruch 1, dadurch gekennzeichnet, daß der pH-Wert in der zweiten Stufe der Bildung der kobalthaltigen $\alpha$-FeOOH-Teilchen 4,5 bis 5,5 beträgt.

5. Verfahren nach Anspruch 1, dadurch gekennzeichnet, daß die Temperatur bei der Herstellung des kobalthaltigen $\alpha$-FeOOH 20 bis 50°C beträgt.

6. Verwendung der gemäß einem der Ansprüche 1 bis 5 hergestellten isotropen magnetischen, kobalthaltigen Eisenoxide zur Herstellung von magnetischen Aufzeichnungsträgern.